# EUROPÄISCHE PATENTSCHRIFT

(11) **EP 2 959 180 B1**
(45) Veröffentlichungstag und Bekanntmachung des Hinweises auf die Patenterteilung: **24.07.2019**
(21) Anmeldenummer: 14707960.2
(22) Anmeldetag: 18.02.2014
(51) Int. Cl.: F16F 9/02

(54) **KOLBEN-ZYLINDER-EINHEIT**
PISTON-CYLINDER UNIT
UNITÉ CYLINDRE-PISTON

(30) Priorität: 19.02.2013 DE 102013101627
(43) Veröffentlichungstag der Anmeldung: 30.12.2015
(73) Patentinhaber: Stabilus GmbH, 56070 Koblenz (DE)
(72) Erfinder: POOSCHEN, Harald, 56072 Koblenz (DE)
(74) Vertreter: Klein, Thomas
(86) Internationale Anmeldenummer: PCT/EP2014/053118
(87) Internationale Veröffentlichungsnummer: WO 2014/128118

(56) Entgegenhaltungen:
- DE-A1- 2 459 340
- DE-A1- 3 836 398
- DE-A1- 4 009 100
- DE-A1- 19 515 368
- DE-U1-202005 011 987

## Beschreibung

Die Erfindung bezieht sich auf eine blockierbare Kolben-Zylinder-Einheit mit einem an beiden Enden verschlossenen, mit unter Druck stehendem Fluid gefüllten Zylinder, in dem ein gegenüber der Innenwand des Zylinders abgedichteter Kolben verschiebbar geführt ist, der den Innenraum des Zylinders in einen ersten Arbeitsraum und einen zweiten Arbeitsraum unterteilt, mit einer an dem Kolben angeordneten Kolbenstange, die durch einen der Arbeitsräume und eine das eine Ende des Zylinders verschließende Führungs- und Dichtungseinheit aus dem Zylinder herausgeführt ist, mit einer axial verschiebbar angeordneten Betätigungsstange, deren eines Ende aus dem Zylinder herausragt und durch ein Betätigungselement in Einschubrichtung der Betätigungsstange bewegbar beaufschlagbar ist und durch deren anderes Ende ein von dem Druck im ersten Arbeitsraum in Schließrichtung beaufschlagter Ventilschieber eines Blockierventils in Öffnungsrichtung des Blockierventils zwischen einer Schließruheposition und seiner Öffnungsposition um einen Verstellhub axial verschiebbar beaufschlagbar ist, durch das der erste Arbeitsraum über eine Verbindung mit dem zweiten Arbeitsraum verbindbar ist, wobei das Betätigungselement zwischen einer Betätigungsstellung und einer Nichtbetätigungsstellung bewegbar ist und das Betätigungselement in der Nichtbetätigungsstellung an einem Anschlag in Anlage ist.

Bei derartigen blockierbaren Kolben-Zylinder-Einheiten ergibt sich aus Herstellungstoleranzgründen in der Nichtbetätigungsstellung des Betätigungselements ein Spiel zwischen dem Betätigungselement und der Betätigungsstange. Dies führt je nach Anwendung zu Klappergeräuschen durch das Anschlagen dieser Teile aneinander.

Zur Vermeidung derartiger Klappergeräusche ist es bekannt, das Betätigungselement mit einer Federkraft in Richtung auf die Betätigungsstange zu beaufschlagen und so in permanenter Anlage an der Betätigungsstange zu halten.

Diese Ausbildung ist aufwendig und erfordert zusätzliche Bauteile und einen zusätzlichen Montageaufwand.

Aus der DE 20 2005 011 987 U1 ist eine Kolben-Zylinder-Einheit der eingangs genannten Art bekannt. Dabei sind Betätigungsstange und Ventilschieber einteilig als Ventilstößel ausgebildet. Dieser Ventilstößel ist an seinem dem Betätigungshebel zugewandten Bereich in drei Stufen mit sich reduzierendem Durchmesser ausgebildet. Die Durchgangsbohrung im Ventilkörper, durch die der Ventilstößel hindurchgeführt ist, ist ebenfalls mit einer zum Betätigungshebel hin sich verjüngenden Stufe ausgebildet. Der Übergang von der größeren zur kleineren Stufe der Durchgangsbohrung im Ventilkörper bildet einen Anschlag, an dem der Übergang von der größten zur mittleren Stufe des Ventilstößels in Anlage ist und die Bewegung des Ventilstößels begrenzt.

Die DE 195 15 368 A1 zeigt eine Kolben-Zylindereinheit-Einheit mit einem Ventilstift, wobei der Ventilstift in einer in einem Ventilkörper ausgebildeten Führungsbohrung verschiebbar angeordnet ist und in der dargestellten Schließruheposition mit einer an dem dem Arbeitsraum zugewandten Ende mit einer Anschlagscheibe an dem Ventilkörper in Anlage ist.

Aufgabe der Erfindung ist es daher eine Kolben-Zylinder-Einheit der eingangs genannten Art zu schaffen, die mit einfachem leicht montierbarem Aufbau Klappergeräusche durch Aneinanderanschlagen von Betätigungselement und Betätigungsstange vermeidet.

Diese Aufgabe wird erfindungsgemäß dadurch gelöst, daß der Ventilschieber in seiner Schließruheposition frei von einer Anlage an einem festen Anschlag von dem Druck in dem ersten Arbeitsraum in Schließrichtung kraftbeaufschlagt und über die Betätigungsstange permanent an dem Betätigungselement abgestützt ist.

Durch diese Ausbildung sind keine zusätzlichen Federelemente zum aneinander in Anlage halten von Betätigungselement und Betätigungsstange erforderlich, sondern es wird der ohnehin vorhandene, das Schließglied beaufschlagende Druck im Zylinder dazu ausgenutzt. Dies ermöglicht auch eine geringe Baugröße der Kolben-Zylinder-Einheit.

Eine einfache Ausbildung besteht darin, daß der Ventilschieber in einer koaxial zum Zylinder sich in einem Ventilkörper erstreckenden Durchgangsöffnung verschiebbar angeordnet ist und einen Bereich reduzierten Durchmessers zwischen einem ersten Bereich und einem zweiten Bereich größeren Durchmessers aufweist, in den radial eine im Ventilkörper ausgebildete Verbindungsöffnung mündet, die den Bereich reduzierten Durchmessers mit dem zweiten Arbeitsraum verbindet, wobei der dem ersten Arbeitsraum entferntere erste Bereich des Ventilschiebers durch eine erste Dichtung abgedichtet in der Durchgangsöffnung verschiebbar geführt ist und der dem ersten Arbeitsraum nähere zweite Bereich größeren Durchmessers des Ventilschiebers durch eine zweite Dichtung abgedichtet in der Durchgangsöffnung verschiebbar geführt ist und in seiner Schließruheposition teilweise sowie in seiner Offenstellung zumindest annähernd vollständig in den ersten Arbeitsraum ragt.

Der Verstellhub des Ventilschiebers zwischen dessen Schließruheposition und dessen Öffnungsposition befindet sich dabei innerhalb eines axialen Vorspannwegs. Bei der Montage wird die Betätigungsstange bis zur Anlage an dem Ventilschieber gebracht und dann bei der Montage des Betätigungselements von diesem die Betätigungsstange und mit ihr der Ventilschieber innerhalb des Vorspannwegs in Öffnungsrichtung entgegen dem Druck im Zylinder verschoben, ohne bis in die Öffnungsposition zu gelangen. In dieser Position ist das Betätigungselement in seiner Nichtbetätigungsstellung und an seinem die Nichtbetätigungsposition definierenden festen Anschlag in Anlage. Gleichzeitig bleibt der Ventilschieber durch den Druck im Zylinder beaufschlagt und stützt sich über die Betätigungsstange und das Betätigungselement an dem Anschlag ab.

In einfacher Ausbildung kann die erste Dichtung und/oder die zweite Dichtung ein im Ventilkörper angeordneter, den Ventilschieber dicht umschließender Dichtring sein.

Eine Ausbildungsmöglichkeit besteht darin, daß der Kolben den Ventilkörper bildet und die Betätigungsstange durch eine koaxiale Durchführung der Kolbenstange verschiebbar hindurch geführt ist.

Dabei kann an dem frei nach außen ragenden Ende der Kolbenstange eine das Betätigungselement aufweisende Betätigungseinrichtung angeordnet sein.

In einer weiteren Ausbildungsmöglichkeit ist der Ventilkörper fest an dem der Kolbenstange abgewandten Ende des Zylinders diesen verschließend angeordnet.

Dabei kann auf der dem Kolben abgewandten Seite an dem Ventilkörper ein Führungselement mit einer koaxialen Durchführung angeordnet sein, durch die die Betätigungsstange verschiebbar hindurchgeführt ist.

In einfacher Ausbildung ist das Betätigungselement ein um eine sich quer zur Längserstreckung der Betätigungsstange erstreckende Schwenkachse schwenkbarer Schwenkhebel, an dem in einem Abstand zur Schwenkachse die Betätigungsstange in Anlage ist.

Dabei kann die Betätigungsstange mit ihrem dem Ventilschieber entgegengesetzten stirnseitigen Ende in Anlage an dem Schwenkhebel sein.

Ausführungsbeispiele der Erfindung sind in der Zeichnung dargestellt und werden im Folgenden näher beschrieben. Es zeigen
- Figur 1: ein erstes Ausführungsbeispiel einer blockierbaren Kolben-Zylinder-Einheit im Längsschnitt
- Figur 2: eine vergrößerte Darstellung eines Ausschnitts der Kolben-Zylinder-Einheit nach Fig. 1 im Längsschnitt
- Figur 3: ein zweites Ausführungsbeispiel einer blockierbaren Kolben-Zylinder-Einheit im Längsschnitt

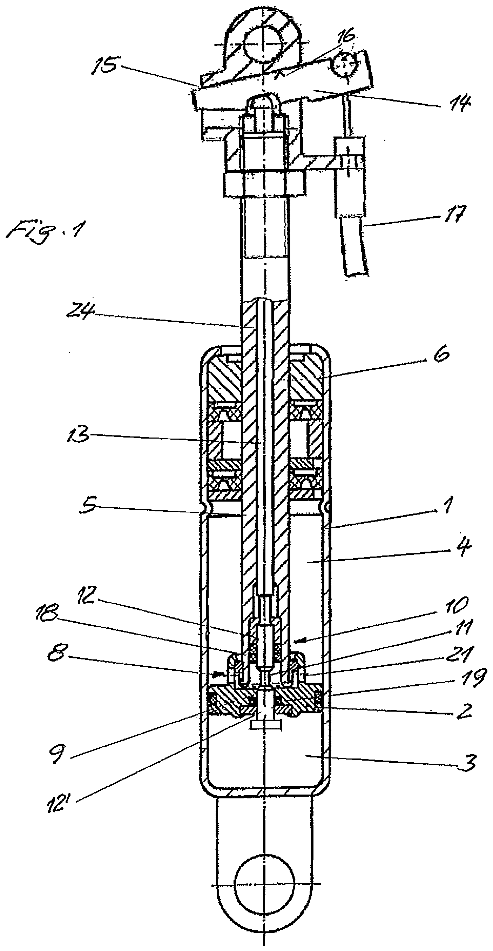

Die in den Figuren 1 bis 3 dargestellten blockierbaren Kolben-Zylinder-Einheiten weisen einen Zylinder 1 auf, in dem ein Kolben 2, 2' axial verschiebbar geführt ist, der den mit einem unter Druck stehenden Gas gefüllten Innenraum des Zylinders 1 in einen ersten Arbeitsraum 3, 3' und einen zweiten Arbeitsraum 4, 4' unterteilt.

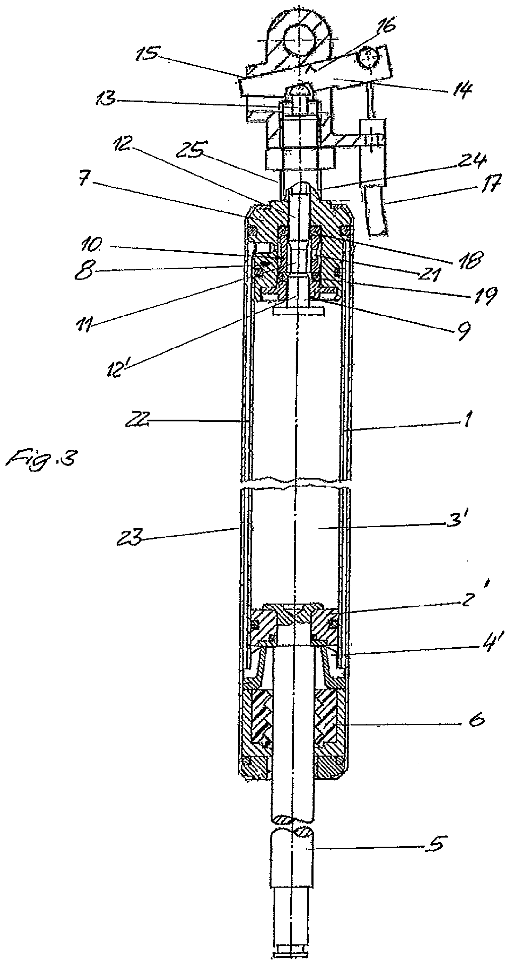

An dem Kolben 2, 2' ist einseitig eine Kolbenstange 5, 5' fest angeordnet, die sich in Figur 1 durch den zweiten Arbeitsraum 4 und in Figur 3 durch den zweiten Arbeitsraum 4' hindurch und durch eine Führungs- und Dichteinheit 6 abgedichtet nach außen geführt ist.

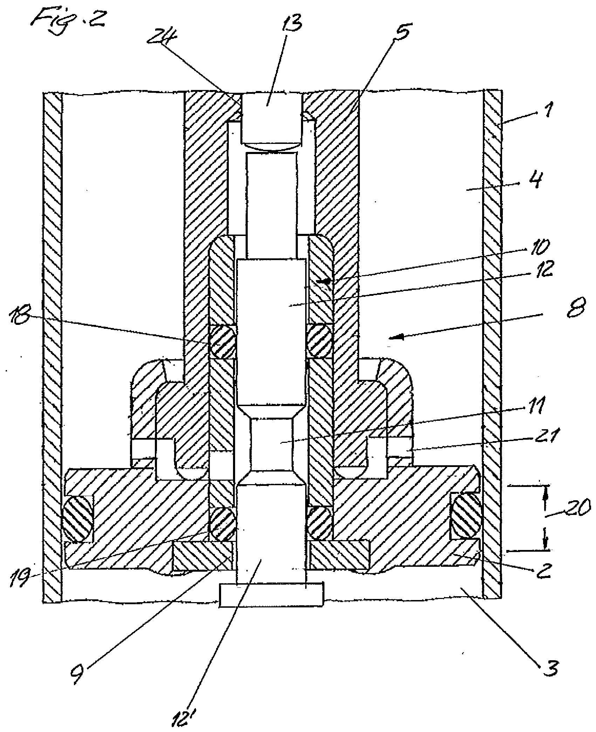

In den Figuren 1 und 2 ist im Kolben 2 und in Figur 3 in einem den Zylinder 1 an seinem der Kolbenstange abgewandten Ende verschließenden Ventilkörper 7 ein Blockierventil 8 angeordnet, das einen in einer koaxial in dem Kolben 2 bzw. in dem Ventilkörper 8 ausgebildeten Durchgangsöffnung 9 verschiebbar angeordneten zylindrischen Ventilschieber 10 aufweist.

Der Ventilschieber 10 besitzt in seinem mittleren Bereich 11 einen reduzierten Durchmesser, während die beiden äußeren Bereiche 12, 12' einen der Durchgangsöffnung 9 entsprechenden größeren Durchmesser aufweisen.

Der äußere Bereich 12 ist von einem ersten Dichtring 18 umschlossen, der die Durchgangsöffnung 9 vom Bereich 11 geringeren Durchmessers des Ventilschiebers 10 zu einer Betätigungsstange 13 hin abdichtet. Diese Abdichtung wird in jeder Axialposition des Ventilschiebers 10 aufrechterhalten.

Der äußere Bereich 12' ist von einem zweiten Dichtring 19 umschlossen, der die Durchgangsöffnung vom Bereich 11 geringeren Durchmessers des Ventilschiebers 10 zum ersten Arbeitsraum 3, 3' in der dargestellten Schließruheposition abdichtet.

An seinem dem ersten Arbeitsraum 3, 3' zugewandten Ende ist der Ventilschieber 10 permanent vom Druck in den ersten Arbeitsraum 3, 3' beaufschlagt.

An dem dem ersten Arbeitsraum 3, 3' abgewandten stirnseitigen Ende des Ventilschiebers 10 ist eine dazu koaxial verschiebbar geführte Betätigungsstange 13 mit ihrem einen Ende in Anlage und mit ihrem anderen Ende an einem um eine Schwenkachse 15 schwenkbaren Schwenkhebel 14 in einem Abstand zur Schwenkachse 15 in Anlage und abgestützt.

Die Betätigungsstange 13 ist bei dem Ausführungsbeispiel der Figuren 1 und 2 durch eine koaxiale Durchführung 24 in der Kolbenstange 5 und bei dem Ausführungsbeispiel der Figur 3 durch eine koaxiale Durchführung 24 in einem an dem Ventilkörper 7 angeordneten Führungselement 25 verschiebbar hindurchgeführt.

In der dargestellten Nichtbetätigungsstellung ist der Schwenkhebel 14 an einem Anschlag 16 in Anlage.

An dem der Schwenkachse 15 entgegengesetzten Endbereich des Schwenkhebels 14 greift die Seele eines Bowdenzugs 17 an, die manuell oder motorisch auf Zug belastet werden kann und dadurch den Schwenkhebel 14 von dem Anschlag 16 abhebend verschwenken kann. Dadurch wird auch der Ventilschieber 10 um einen Verstellhub 20 verschoben. Am Ende des Verstellhubes 20 ist der Bereich 11 geringeren Durchmessers des Ventilschiebers 10 in der Öffnungsposition, einer den zweiten Dichtring 19 überdeckenden Position, so daß der erste Arbeitsraum 3, 3' durch den Bereich 11 geringeren Durchmessers den zweiten Dichtring 19 umströmen kann. Dies ist die Öffnungsposition des Ventilschiebers 10.

Der Bereich 11 geringeren Durchmessers ist dann auch in Überdeckung mit einer radial im Kolben 2 bzw. im Ventilkörper 7 ausgebildeten und in die Durchgangsöffnung mündenden Verbindungsöffnung 21.

In den Figuren 1 und 2 führt die Verbindungsöffnung 21 unmittelbar zum zweiten Arbeitsraum 4.

Bei dem Ausführungsbeispiel der Figur 3 führt die Verbindungsöffnung 21 zu einem nach außen verschlossenen Ringspalt 22 zwischen dem Zylinder 1 und einem den Zylinder mit Abstand umschließenden Außenzylinder 23. An seinem dem Ventilkörper 7 entgegengesetzten Ende ist der Ringspalt 22 mit dem zweiten Arbeitsraum 4' verbunden.

Durch diese Schwenkbewegung des Schwenkhebels 14 wird die Betätigungsstange 13 auf das Blockierventil 8 zu verschoben und verschiebt auch den Ventilschieber 10 weiter in den ersten Arbeitsraum 3, 3' hinein.

Das Erreichen der Öffnungsposition durch den Ventilschieber 10 führt also bei beiden Ausführungsbeispielen dazu, daß der erste Arbeitsraum 3, 3' mit dem zweiten Arbeitsraum 4, 4' verbunden wird.

Bei der Montage der Kolben-Zylinder-Einheiten wird nach dem Einbau des Blockierventils 8 und der Füllung des Zylinders 1 mit unter einem Druck stehenden Gas die Betätigungsstange 13 in die Durchführung 24 eingeführt.

Nun erfolgt die Anordnung des Schwenkhebels 14. Aufgrund der Länge der Betätigungsstange 13 muß diese ein Stück in Öffnungsrichtung verschoben werden, damit der Schwenkhebel 14 in seine an dem Anschlag 16 anliegende Einbaulage gelangen kann. Dabei wird auch der Ventilschieber 10 um dieses Stück entgegen dem Druck in dem ersten Arbeitsraum 3, 3' in Öffnungsrichtung verschoben. Aber nur so weit, daß der Bereich 12' größeren Durchmessers weiterhin von dem zweiten Dichtring 19 umschlossen und somit die Durchgangsöffnung 9 verschlossen bleibt. Nun befindet sich der Ventilschieber 10 in seiner Schließruheposition. Da der Ventilschieber 10 weiterhin von dem Druck im ersten Arbeitsraum 3, 3' beaufschlagt bleibt, wird er von diesem gegen die Betätigungsstange 13 kraftbeaufschlagt, wobei die Betätigungsstange 13 wiederum den Schwenkhebel 14 in feste Anlage an den Anschlag 16 drückt, so daß unabhängig von Herstellungstoleranzen kein Spiel zwischen Ventilschieber 10 und Anschlag 16 entstehen und so Klappergeräusche verursachen kann.

Dazu sind gegenüber dem Stand der Technik aber keine zusätzlichen Bauteile erforderlich sondern es wird nur der ohnehin im Zylinder 1 vorhandene Druck ausgenutzt.

### Bezugszeichenliste

- 1: Zylinder
- 2: Kolben
- 3: erster Arbeitsraum
- 3': erster Arbeitsraum
- 4: zweiter Arbeitsraum
- 4': zweiter Arbeitsraum
- 5: Kolbenstange
- 6: Führungs- und Dichteinheit
- 7: Ventilkörper
- 8: Blockierventil
- 9: Durchgangsöffnung
- 10: Ventilschieber
- 11: Bereich geringeren Durchmessers
- 12: Bereich größeren Durchmessers
- 12': Bereich größeren Durchmessers
- 13: Betätigungsstange
- 14: Schwenkhebel
- 15: Schwenkachse
- 16: Anschlag
- 17: Bowdenzug
- 18: erster Dichtring
- 19: zweiter Dichtring
- 20: Verstellhub
- 21: Verbindungsöffnung
- 22: Ringspalt
- 23: Außenzylinder
- 24: Durchführung
- 25: Führungselement

## Patentansprüche

1. Blockierbare Kolben-Zylinder-Einheit mit einem an beiden Enden verschlossenen, mit unter Druck stehendem Fluid gefüllten Zylinder (1), in dem ein gegenüber der Innenwand des Zylinders (1) abgedichteter Kolben (2, 2') verschiebbar geführt ist, der den Innenraum des Zylinders (1) in einen ersten Arbeitsraum (3, 3') und einen zweiten Arbeitsraum (4, 4') unterteilt, mit einer an dem Kolben (2, 2') angeordneten Kolbenstange (5, 5'), die durch einen der Arbeitsräume (3', 4) und eine das eine Ende des Zylinders (1) verschließende Führungs- und Dichtungseinheit (6) aus dem Zylinder (1) herausgeführt ist, mit einer axial verschiebbar angeordneten Betätigungsstange (13), deren eines Ende aus dem Zylinder (1) herausragt und durch ein Betätigungselement in Einschubrichtung der Betätigungsstange (13) bewegbar beaufschlagbar ist und durch deren anderes Ende ein von dem Druck im ersten Arbeitsraum (3, 3') in Schließrichtung beaufschlagter Ventilschieber (10) eines Blockierventils (8) in Öffnungsrichtung des Blockierventils (8) zwischen einer Schließruheposition und seiner Öffnungsposition um einen Verstellhub (20) axial verschiebbar beaufschlagbar ist, durch das der erste Arbeitsraum (3, 3') über eine Verbindung mit dem zweiten Arbeitsraum (4, 4') verbindbar ist, wobei das Betätigungselement zwischen einer Betätigungsstellung und einer Nichtbetätigungsstellung bewegbar ist und das Betätigungselement in der Nichtbetätigungsstellung an einem Anschlag (16) in Anlage ist, **dadurch gekennzeichnet, daß** der Ventilschieber (10) in seiner Schließruheposition frei von einer Anlage an einem festen Anschlag von dem Druck in dem ersten Arbeitsraum (3, 3') in Schließrichtung kraftbeaufschlagt und über die Betätigungsstange (13) permanent an dem Betätigungselement abgestützt ist.

2. Kolben-Zylinder-Einheit nach Anspruch 1, **dadurch gekennzeichnet, daß** der Ventilschieber (10) in einer koaxial zum Zylinder (1) sich in einem Ventilkörper (7) erstreckenden Durchgangsöffnung (9) verschiebbar angeordnet ist und einen Bereich (11) reduzierten Durchmessers zwischen einem ersten Bereich (12) und einem zweiten Bereich (12') größeren Durchmessers aufweist, in den radial eine im Ventilkörper (7) ausgebildete Verbindungsöffnung (21) mündet, die den Bereich reduzierten Durchmessers (11) mit dem zweiten Arbeitsraum (4, 4') verbindet, wobei der dem ersten Arbeitsraum (4, 4') entferntere erste Bereich (12) größeren Durchmessers des Ventilschiebers (10) durch eine erste Dichtung abgedichtet in der Durchgangsöffnung (9) verschiebbar geführt ist und der dem ersten Arbeitsraum (3, 3') nähere zweite Bereich (12') größeren Durchmessers des Ventilschiebers (10) durch eine zweite Dichtung abgedichtet in der Durchgangsöffnung (9) verschiebbar geführt ist und in seiner Schließruheposition teilweise sowie in seiner Offenstellung zumindest annähernd vollständig in den ersten Arbeitsraum (3, 3') ragt.

3. Kolben-Zylinder-Einheit nach Anspruch 2, **dadurch gekennzeichnet, daß** die erste Dichtung und/oder die zweite Dichtung ein im Ventilkörper (7) angeordneter, den Ventilschieber (10) dicht umschließender Dichtring (18, 19) ist.

4. Kolben-Zylinder-Einheit nach einem der Ansprüche 2 und 3, **dadurch gekennzeichnet, daß** der Kolben (2) den Ventilkörper bildet und die Betätigungsstange (13) durch eine koaxiale Durchführung (24) der Kolbenstange (5) verschiebbar hindurch geführt ist.

5. Kolben-Zylinder-Einheit nach Anspruch 4, **dadurch gekennzeichnet, daß** an dem frei nach außen ragenden Ende der Kolbenstange (5) eine das Betätigungselement aufweisende Betätigungseinrichtung angeordnet ist.

6. Kolben-Zylinder-Einheit nach einem der Ansprüche 2 und 3, **dadurch gekennzeichnet, daß** der Ventilkörper (7) festandem der Kolbenstange (5') abgewandten Ende des Zylinders (1) diesen verschließend angeordnet ist.

7. Kolben-Zylinder-Einheit nach Anspruch 6, **dadurch gekennzeichnet, daß** auf der dem Kolben (2') abgewandten Seite an dem Ventilkörper (7) ein Führungselement (25) mit einer koaxialen Durchführung (24) angeordnet ist, durch die die Betätigungsstange (13) verschiebbar hindurchgeführt ist.

8. Kolben-Zylinder-Einheit nach Anspruch 7, **dadurch gekennzeichnet, daß** an dem frei nach außen ragenden Ende des Führungselements (25) eine das Betätigungselement aufweisende Betätigungseinrichtung angeordnet ist.

9. Kolben-Zylinder-Einheit nach einem der vorhergehenden Ansprüche, **dadurch gekennzeichnet, daß** das Betätigungselement ein um eine sich quer zur Längserstreckung der Betätigungsstange (13) erstreckende Schwenkachse (15) schwenkbarer Schwenkhebel (14) ist, an dem in einem Abstand zur Schwenkachse (15) die Betätigungsstange (13) in Anlage ist.

10. Kolben-Zylinder-Einheit nach Anspruch 9, **dadurch gekennzeichnet, daß** die Betätigungsstange (13) mit ihrem dem Ventilschieber (10) entgegengesetzten stirnseitigen Ende in Anlage an dem Schwenkhebel (14) ist.

## Claims

1. Blockable piston-cylinder unit comprising a cylinder (1) which is closed at both ends and filled with fluid under pressure, in which a piston (2, 2') sealed off with respect to the inner wall of the cylinder (1) is displaceably guided and subdivides the interior of the cylinder (1) into a first working chamber (3, 3') and a second working chamber (4, 4'), having a piston rod (5, 5') which is arranged on the piston (2, 2') and which is led out of the cylinder (1) through one of the working chambers (3', 4) and a guiding and sealing unit (6) closing one end of the cylinder (1), having an axially displaceably arranged actuating rod (13), one end of which projects out of the cylinder (1) and can be acted on by an actuating element so as to be movable in the insertion direction of the actuating rod (13) and by the other end of which a valve spool (10) of a blocking valve (8) acted on in the closing direction by the pressure in the first working chamber (3, 3') can be acted on axially displaceably in the opening direction of the blocking valve (8) between a closed rest position and its opening position by a valve stroke (20), by means of which the first working chamber (3, 3') can be connected to the second working chamber (4, 4') via a connection, the actuating element being movable between an actuating position and a non-actuating position, and the actuating element being in contact with a stop (16) in the non-actuating position, **characterized in that** the valve spool (10) in its closed rest position free from contact with a fixed stop has a force in the closing direction applied by the pressure in the first working chamber (3, 3') and is supported permanently on the actuating element by the actuating rod (13).

2. Piston-cylinder unit according to Claim 1, **characterized in that** the valve spool (10) is displaceably arranged in a passage opening (9) extending coaxially with respect to the cylinder (1) in a valve body (7) and has a region (11) of reduced diameter between a first region (12) and a second region (12') of greater diameter, into which a connecting opening (21) formed in the valve body (7) opens radially, connecting the region of reduced diameter (11) to the second working chamber (4, 4'), wherein the first region (12) of greater diameter of the valve spool (10), more remote from the first working chamber (3, 3'), is displaceably guided in the passage opening (9), sealed off by a first seal, and the second region (12') of greater diameter of the valve spool (10), closer to the first working chamber (3, 3'), is displaceably guided in the passage opening (9), sealed off by a second seal, and in its closed rest position projects partly and, in its open position at least approximately completely, into the first working chamber (3, 3').

3. Piston-cylinder unit according to Claim 2, **characterized in that** the first seal and/or the second seal is a sealing ring (18, 19) arranged in the valve body (7) and enclosing the valve spool (10) in a sealing manner.

4. Piston-cylinder unit according to either of Claims 2 and 3, **characterized in that** the piston (2) forms the valve body and the actuating rod (13) is displaceably guided through a coaxial bushing (24) of the piston rod (5).

5. Piston-cylinder unit according to Claim 4, **characterized in that** an actuating device having the actuating element is arranged at the freely outwardly projecting end of the piston rod (5).

6. Piston-cylinder unit according to either of Claims 2 and 3, **characterized in that** the valve body (7) is fixedly arranged on the end of the cylinder (1) facing away from the piston rod (5'), closing the said cylinder (1).

7. Piston-cylinder unit according to Claim 6, **characterized in that** on the valve body (7), on the side facing away from the piston (2'), there is arranged a guide element (25) having a coaxial bushing (24), through which the actuating rod (13) is displaceably guided.

8. Piston-cylinder unit according to Claim 7, **characterized in that** an actuating device having the actuating element is arranged on the freely outwardly projecting end of the guide element (25) .

9. Piston-cylinder unit according to one of the preceding claims, **characterized in that** the actuating element is a pivoting lever (14) which can be pivoted about a pivot axis (15) extending transversely with respect to the longitudinal extent of the actuating rod (13) and on which the actuating rod (13) is in contact at a distance from the pivot axis (15).

10. Piston-cylinder unit according to Claim 9, **characterized in that** the actuating rod (13) is in contact with the pivoting lever (14) at its front end opposite the valve spool (10).

## Revendications

1. Unité cylindre-piston pouvant être bloquée avec un cylindre (1) fermé aux deux extrémités et rempli d'un fluide sous pression, dans lequel un piston (2, 2') étanche par rapport à la paroi intérieure du cylindre (1) est guidé de façon coulissante, et divise l'espace intérieur du cylindre (1) en une première chambre de travail (3, 3') et une seconde chambre de travail (4, 4'), avec une tige de piston (5, 5') disposée sur le piston (2, 2'), qui est menée hors du cylindre (1) à travers une des chambres de travail (3', 4) et une unité de guidage et d'étanchéité (6) fermant une première extrémité du cylindre (1), avec une tige d'actionnement (13) disposée de façon coulissante axialement, dont une extrémité sort du cylindre (1) et peut être actionnée en mouvement par un élément d'actionnement dans la direction de rentrée de la tige d'actionnement (13) et par l'autre extrémité de laquelle un coulisseau de soupape (10) d'une soupape de blocage (8) actionné dans la direction de fermeture par la pression dans la première chambre de travail (3, 3') peut être actionné de façon coulissante axialement avec une course de réglage (20) dans la direction d'ouverture de la soupape de blocage (8) entre une position de repos fermée et sa position ouverte, par laquelle la première chambre de travail (3, 3') peut être reliée à la seconde chambre de travail (4, 4') par une liaison, dans laquelle l'élément d'actionnement peut être déplacé entre une position d'actionnement et une position de non actionnement, et l'élément d'actionnement dans la position de non actionnement est appliqué sur une butée (16), **caractérisée en ce que** le coulisseau de soupape (10) dans sa position de repos fermée est soumis à une force dans la direction de fermeture par la pression dans la première chambre de travail (3, 3') sans application sur une butée fixe et est appuyé en permanence sur l'élément d'actionnement par l'intermédiaire de la tige d'actionnement (13).

2. Unité cylindre-piston selon la revendication 1, **caractérisée en ce que** le coulisseau de soupape (10) est disposé de façon coulissante dans une ouverture de passage (9) s'étendant dans un corps de soupape (7) de façon coaxiale au cylindre (1) et présente une région (11) de diamètre réduit entre une première région (12) et une seconde région (12') de plus grand diamètre, dans laquelle débouche radialement une ouverture de liaison (21) formée dans le corps de soupape (7), laquelle relie la région de diamètre réduit (11) à la seconde chambre de travail (4, 4'), dans laquelle la première région (12) de plus grand diamètre du coulisseau de soupape (10) la plus éloignée de la première chambre de travail (3, 3') est guidée de façon coulissante dans l'ouverture de passage (9) en étant rendue étanche par un premier joint d'étanchéité et la seconde région (12') de plus grand diamètre du coulisseau de soupape (10) la plus proche de la première chambre de travail (3, 3') est guidée de façon coulissante dans l'ouverture de passage (9) en étant rendue étanche par un second joint d'étanchéité et pénètre dans sa position de repos fermée partiellement ainsi que dans sa position ouverte au moins approximativement entièrement dans la première chambre de travail (3, 3').

3. Unité cylindre-piston selon la revendication 2, **caractérisée en ce que** le premier joint d'étanchéité et/ou le second joint d'étanchéité est un anneau d'étanchéité (18, 19) disposé dans le corps de soupape (7) et entourant de façon étanche le coulisseau de soupape (10).

4. Unité cylindre-piston selon une des revendications 2 et 3, **caractérisée en ce que** le piston (2) forme le corps de soupape et la tige d'actionnement (13) est guidée de façon coulissante à travers un passage coaxial (24) de la tige de piston (5).

5. Unité cylindre-piston selon la revendication 4, **caractérisée en ce qu'**un dispositif d'actionnement présentant l'élément d'actionnement est disposé à l'extrémité de la tige de piston (5) s'étendant librement vers l'extérieur.

6. Unité cylindre-piston selon une des revendications 2 et 3, **caractérisée en ce que** le corps de soupape (7) est disposé de façon fixe sur l'extrémité du cylindre (1) située à l'opposé de la tige de piston (5'), en fermant ce dernier.

7. Unité cylindre-piston selon la revendication 6, **caractérisée en ce qu'**un élément de guidage (25) avec un passage coaxial (24), à travers lequel la tige d'actionnement (13) est guidée de façon coulissante, est disposé sur le corps de soupape (7) sur le côté situé à l'opposé du piston (2').

8. Unité cylindre-piston selon la revendication 7, **caractérisée en ce qu'**un dispositif d'actionnement présentant l'élément d'actionnement est disposé sur l'extrémité de l'élément de guidage (25) s'étendant librement vers l'extérieur.

9. Unité cylindre-piston selon l'une quelconque des revendications précédentes, **caractérisée en ce que** l'élément d'actionnement est un levier pivotant (14) pouvant pivoter autour d'un axe de pivotement (15) s'étendant transversalement à l'extension longitudinale de la tige d'actionnement (13), et sur lequel la tige d'actionnement (13) est appliquée à une distance de l'axe de pivotement (15).

10. Unité cylindre-piston selon la revendication 9, **caractérisée en ce que** la tige d'actionnement (13) est appliquée sur le levier pivotant (14) avec son extrémité frontale opposée au coulisseau de soupape (10) .
